Europäisches Patentamt

European Patent Office

Office européen des brevets

(11) Veröffentlichungsnummer: **0 282 591**
A1

(12) # EUROPÄISCHE PATENTANMELDUNG
Veröffentlicht nach Art. 158 Abs. 3 EPÜ

(21) Anmeldenummer: 87900730.0

(22) Anmeldetag: 26.09.86

Daten der zugrundeliegenden internationalen Anmeldung:

(86) Internationale Anmeldenummer:
PCT/SU86/00092

(87) Internationale Veröffentlichungsnummer:
WO88/02302 (07.04.88 88/08)

(51) Int. Cl.³: **B 28 B 3/00**

(43) Veröffentlichungstag der Anmeldung:
21.09.88 Patentblatt 88/38

(84) Benannte Vertragsstaaten:
AT DE FR IT

(71) Anmelder: BELORUSSKY POLITEKHNICHESKY
INSTITUT
Leninksy pr., 65
Minsk, 220027(SU)

(72) Erfinder: SAMTSOV, Valery Pavlovich
ul. Shirokaya, 38-4-33
Minsk, 220131(SU)

(72) Erfinder: LYASHKEVICH, Igor Mikhailovich
ul. Vostochnaya, 30-88
Minsk, 220013(SU)

(72) Erfinder: RAPTUNOVICH, Galina Solomonovna
ul. Vostochnaya, 30-88
Minsk, 220013(SU)

(72) Erfinder: SUSHKEVICH, Vikenty Grigorievich
ul. Volgo-Donskaya, 23-2
Minsk, 220049(SU)

(72) Erfinder: DANKO, Gennady Yakovlevich
ul. Chkalova, 1-40
Minsk, 220039(SU)

(72) Erfinder: CHACHIN, Viktor Nikolaevich
ul. Kulman, 15-91
Minsk, 220100(SU)

(72) Erfinder: STEPANENKO, Alexandr Vasilievich
ul. Surganova, 40-25
Minsk, 220013(SU)

(72) Erfinder: ISAEVICH, Leonid Alexandrovich
ul. Stroitelei, 35-1
Minsk, 220102(SU)

(74) Vertreter: von Füner, Alexander, Dr. et al,
Patentanwälte v. Füner, Ebbinghaus, Finck Mariahilfplatz
2 & 3
D-8000 München 90(DE)

(54) **VERFAHREN ZUR HERSTELLUNG VON KUNSTSTEIN.**

(57) Verfahren zur Herstellung von Kunststein besteht in einer Einwirkung des bis auf 250 – 2 000 MPa ansteigenden Stossdruckes auf ein Rohstoffgemisch auf der Basis von Kristallhydraten, bei dem ein plastisches Fliessen der Kristallhydrate unter deren Sinterug auftritt.

EP 0 282 591 A1

# VERFAHREN ZUR HERSTELLUNG VON KUNSTSTEIN 0282591

## Technisches Gebiet

Die vorliegende Erfindung bezieht sich auf das Gebiet der Baustoffe ., insbesondere auf Verfahren zur Herstellung von Kunststein.

Der nach dem erfindungsgemässen Verfahren aus Rohstoffmischungen auf der Basis von Kristallhydraten hergestellte Kunststein kann bei der Errichtung und Verkleidung von Gebäuden im Zivil- und Industriebau sowie im Strassenbau Anwendung finden.

## Vorangehender Stand der Technik

Zur Zeit ist ein Verfahren zur Herstellung von Kunststein, beispielsweise von Beton durch Pressen eines Gemisches aus Mineralbindemittel und Wasser (s. SU-Urheberschein 662 348, B 28 B 1/10, veröffentlicht am 15.05.79, Bulletin "Entdeckungen, Erfindungen, gewerbliche Muster, Warenzeichen", Bl. Nr. 18) bekannt.

Das Mineralbindemittel stellt ein Produkt der Röstung des Mineralrohstoffes dar. Das Gemisch des Bindemittels mit Wasser bei einem Wasser-Feststoff-Verhältnis von 0,25 bis 0,6 wird unter einem Druck von 100 MPa gepresst. Zur gleichen Zeit wirkt auf das Gemisch die Stosswelle ein, die sich durch eine sprungartige Drucksteigerung bis auf 10 - 100 MPa kennzeichnet. Die Ausbreitungsfront der Stosswelle fällt dabei mit der Wirkungsrichtung des statischen Drucks zusammen.

Bekannt ist weiter ein Verfahren zur Herstellung von Kunststein (s. SU-Urheberschein Nr. 863 347, B 22 B 1/10, veröffentlicht am 15.09.81 im Bulletin "Entdeckungen, Erfindungen, gewerbliche Muster, Warenzeichen", Bl. Nr. 34), nach dem ein Gemisch aus Mineralbindemittel mit Wasser einem Pressen unter einem Druck von 5 bis 20 MPa bei einem Wasser-Feststoff-Verhältnis zwischen 0,25 und 0,3 unter gleichzeitiger Wirkung der Stosswelle auf dieses mit einer Schwingungsweite von $10^2$ bis $10^4$ MPa ausgesetzt wird. Die Aus-

- 2 -

breitungsfront der Stosswelle wird dabei unter einem Winkel von 5 bis 15° zu der Wirkungsrichtung des statischen Drucks ausgerichtet, wodurch eine zusätzliche Verdichtung und Verfestigung des herzustellenden Kunststeins begünstigt wird.

Bei dem oben beschriebenen Verfahren ermöglicht die Wirkung der Stosswelle auf das Rohstoffgemisch das Erstarren desselben, d.h. die Strukturbildung, zu beschleunigen. Jedoch verbleibt die Hydratisierung des Bindemittels immernoch als bestimmendes Moment der Strukturbildung. Daher bedarf es zur Erzielung der vorgegebenen Festigkeit des Kunststeins einer genug langen Zeitdauer, bis 36 Stunden.

Bekannt ist auch ein Verfahren zur Herstellung von Kunststein (s. SU-Urheberschein 528 279, C 04 B 13/14 aus dem Bulletin "Entdeckungen, Erfindungen, gewerbliche Muster, Warenzeichen", Bl. Nr. 34, veröffentlicht am 15.09.76) durch Pressen eines Rohstoffgemisches auf Grund von Kristallhydraten, beispielsweise von Gips ($CaSO_4 \cdot 2H_2O$), unter einem Druck von 80 bis 120 MPa und bei einer Temperatur zwischen 150 und 160° C innerhalb von 40 bis 60 Minuten. Beim Pressen wird auch eine teilweise Dehydratisierung durchgeführt.

Die Struktur des hergestellten Kunststeins formiert sich hauptsächlich aus $\alpha$-Kalziumsulfathalbhydrat. Deshalb verliert er unter der Wasserwirkung seine Festigkeitseigenschaften und lässt sich leicht zerstören.

## Offenbarung der Erfindung

Der Erfindung liegt die Aufgabe zugrunde, ein Verfahren zur Herstellung von Kunststein durch jeweilige Auswahl solcher Pressdruckbereiche zu entwickeln, dass dadurch die Strukturbildung des Baukunststeins unter Erzielung der erforderlichen Betriebskennwerte grösstmöglich beschleunigt wird.

Das Ziel der Erfindung besteht in der Entwicklung eines solchen Verfahrens zur Herstellung von Kunststein, das die Strukturbildung des Baukunststeins unter Erzielung der erforderlichen Betriebskennwerte grösstmöglich beschleunigt.

Die Aufgabe wird dadurch gelöst, dass ein Verfahren zur Herstellung von Kunststein durch Einwirkung eines Pressdruckes auf das Rohstoffgemisch auf Grund von Kristallhydraten vorgeschlagen wird, nach dem erfindungsgemäss das genannte Gemisch einem Stossdruck ausgesetzt wird, der bis 250 - 2000 MPa gesteigert wird und bei dem plastisches Fliessen der Kristallohydrate unter deren Sinterung vor sich geht.

Das erfindungsgemässe Verfahren ermöglicht es, die Dauer der Strukturbildung auf 15 Sekunden statt 36 und mehr Stunden nach den bisher bekannten Herstellungsverfahren maximal zu reduzieren.

Durch Wirkung des Stossdruckes auf das Rohstoffgemisch wird aus diesem eine verdichtete Struktur gewonnen, mit der die guten, zeitbeständigen Betriebswerte des Kunststeins (Festigkeit, Wasseraufnahme, Wasserbeständigkeit) erreicht werden. Das erfindungsgemässe Verfahren gestattet es, einen Kunststein aus Naturrohstoffen wie Gips, Asbest, Kalziumkarbonat, sowie auch aus Abfällen bei der Industrieproduktion wie Kunstgips, Abfälle der Zementherstellung, herzustellen, die ohne Vorröstung zur Anwendung kommen, wodurch auch die Wirksamkeit und Wirtschaftlichkeit des verfahrenstechnischen Vorganges der Herstellung des Kunststeins gesteigert werden.

Um den günstigsten Zustand des plastischen Fliessens der Kristallhydrate unter deren Sinterung zu erreichen, durch die die gewünschte Intensivierung des Strukturbildung bewirkt wird, ist es zweckmässig, das genannte Rohstoffgemisch der Wirkung eines Stossdruckes auszusetzen, der sich mit einer Frequenz von 0,8 bis 1,0 Hz innerhalb von 0,1 bis 15 Sekunden ändert. Zu demselben Zweck ist es wünschenswert, das genannte Rohstoffgemisch gleichzeitig mit dem Stoßdruck, der eine Geschwindigkeit von 0,16 bis 0,33 m/s hat, relativ zu der Wirkungsrichtung des betreffenden Stoßdrucks tangential zu verschieben.

Um den Kunststein mit einer homogenen, verdichteten Struktur herzustellen, ist das genannte Rohstoffgemisch vor der Stossdruckwirkung bis zur Bildung der Teilchen mit einer Korngrösse von 0,003 bis 0,07 mm vorzugsweise zu dispergieren.

Falls der Kunststein aus den Abfällen bei der Industrie-

- 4 -

produktion hergestellt wird, sind die genannten Abfälle wünschenswert in einem Gasstrom mit einer Temperatur von 90 bis 300° C und mit einer Strömungsgeschwindigkeit von 10 bis 25 m/s zu dispergieren.

Das erfindungsgemässe Verfahren wird wie folgt durchgeführt.

Zunächst wird das Rohstoffgemisch auf Grund der Kristallhydrate einem bis zu 250 - 2000 MPa ansteigenden Stossdruck ausgesetzt, bei dem ein plastisches Fliessen der Kristallhydrate unter deren Sinterung auftritt.

Als genanntes Rohstoffgemisch können Naturgips, hydratisierte Mineralien des Zementklinkers, ungebrannte Asbestzementabfälle (Asbestit), gipshaltige Abfälle wie Phosphatgips, Borogips, Zitrogips u.a.m. sowie Gemische, die Kupfer- und Eisenvitriol, Natriumsulfathydrat, kristallwasserhaltige Salze von Bor-, Kohlen-, Phosphorsäure und andere in ihrer Zusammensetzung das Kristallwasser einschliessende Verbindungen in Frage kommen.

Bei der Wirkung des Stossdrucks auf die genannten Rohstoffgemische kommt es zur Verformung der Kristallhydrate unter Wärmeanregung der Wassermoleküle im Kristallgitter, die die Aufspaltung der energetischen Bindungen derselben im Kristall unter Bildung der aktiven Zentren vorzugsweise an den Fehlerstellen der Kristallstruktur verursacht. Unter der Wirkung des Stossdrucks bei einer dichten Kontaktumsetzung der Teilchen entsteht dabei ein plastisches Fliessen der Kristallhydrate mit deren Sinterung infolge der Bildung von neuen Bindungen zwischen den Teilchen an den aktiven Zentren.

Die oberen Grenzen des Stossdrucks von 250 - 2000 MPa bestimmt die Energie der Dehydratationsaktivierung der Kristallhydrate, die sich aus deren Struktur ergibt.

Die Durchführung des erfindungsgemässen Verfahrens unter den genannten Verhältnissen ermöglicht die Herstellung des Kunststeins mit einer verdichteten Struktur, die dessen hohe physikalisch-mechanische Eigenschaften bewirkt. Eine solche Strukturbildung verläuft dabei in einer kurzen Zeitspanne, die durch Thermodynamik des Vorganges ermittelt wird.

Bisher nach den bekannten Herstellungsverfahren wurden die Kunststeine mit der genannten Struktur nur durch Hydratation der Mineralbindemittel hergestellt, die beim Rösten des Mineralrohstoffs gewonnen wurden. Darüber hinaus bedarf es im Laufe der Hydratationserstarrung in der Regel einer Wärmebehandlung.

Somit ist das vorhergehende Rösten des Mineralrohstoffs und die darauffolgende Wärmebehandlung des Kunststeins zwecks dessen Verfestigung ein unentbehrlicher Teil des verfahrenstechnischen Vorganges dessen Herstellung. Folglich zeichnen sich die genannten Herstellungsvorgänge durch hohen Energie- und Arbeitsaufwände aus.

Das erfindungsgemässe Verfahren ermöglicht es, durch Wirkung des Stossdrucks auf das Rohstoffgemisch auf Grund der Kristallhydrate in einer kurzen Zeitspanne einen festen Kunststein mit guten Betriebskennwerten bei geringen Energie- und Arbeitsaufwänden herzustellen.

Das erfindungsgemässe Verfahren macht es möglich, den Kunststein in Form von Tafeln, Ziegel, Blöcken sowie Schotter, Granulat herzustellen. Die Herstellungsart der Erzeugnisse bestimmen die zu diesem Zweck verwendeten Ausrüstungen. Zur Herstellung des Schotters und des Granulats wird das Rohstoffgemisch auf Grund der Kristallhydrate in Walzenpressen verarbeitet. Bei der Herstellung von Tafeln, Ziegeln und Blöcken werden Stempel- bzw. hydraulischschlagende Pressen verwendet, die mit speziellen Formausrüstungen ausgestattet werden.

Zwecks bester Durchführung des erfindungsgemässen Verfahrens wird vorgeschlagen, auf das Rohstoffgemisch mit dem mit einer Frequenz alternierenden Stossdruck von 0,8 bis 1,0Hz 0,1 bis 15 Sekunden lang einzuwirken. Dazu werden die Stempel- bzw. hydraulischschlagenden Pressen oder jede andere Gesenkschmiedepresse eingesetzt.

Die genannte Häufigkeit der Stossdruckanlegung bewirkt die notwendige Energiehöhe, bei der ein plastisches Fliessen der Kristallhydrate auftritt, während die Zeitdauer sich aus der Dauer des Vorganges der Sinterung ergibt.

- 6 -

Das erfindungsgemässe Verfahren kann auch vermittels Stossdruckwirkung auf das Rohstoffgemisch durchgeführt werden, das relativ zu der Wirkungsrichtung des genannten Stossdrucks mit einer Geschwindigkeit von 0,16 bis 0,33 m/s tangential verschoben wird. Dazu werden Walzenpressen benutzt, wobei die Tangentialverschiebung durch entsprechende Bewegungsabweichung der Pressenwalzen erreicht wird. Zum Gebrauch können auch Stempel- bzw. hydraulischschlagende Pressen kommen, in welchen die genannte Tangentialverschiebung mit Hilfe einer Schwingungs- bzw. Drehbewegung des pressenden Arbeitsorgans erreicht wird. Die obengenannte Verschiebungsgeschwindigkeit bestimmt die Dauer der Sinterung. Die Verwirklichung des Verfahrens unter derartigen Verhältnissen, bei denen eine Zusatzverformung der Kristallhydrate zustandekommt, ermöglicht es, die Zeitspanne der Strukturbildung des Kunststeins bis auf 0,1 Sekunden zu reduzieren.

Es ist zu empfehlen, das eingesetzte Rohstoffgemisch bis auf die Bildung der Teilchen mit einer Korngrösse von 0,003 bis 0,07 mm zu dispergieren. Durch diese Dispersität der Teilchen wird jeweils deren gute Sinterung erreicht und die Erhaltung der optimalen physikalisch-mechanischen Eigenschaften des Kunststeins gesichert, sowie die Sinterung der verschiedenartigen Kristallhydrate ermöglicht.

Bei der Benutzung von Rohstoffgemischen mit einem erhöhten Feuchtigkeitsgehalt, beispielsweise von bei der Industrieproduktion anfallenden Schlammabfällen wie Phosphatgips, empfiehlt es sich, diese in einem Gasstrom mit einer Temperatur von 90 bis 300° C und einer Strömungsgeschwindigkeit von 10 bis 25 m/s zu dispergieren.

## Beste Ausführungsvariante der Erfindung

Als beste Ausführungsvariante des Verfahrens wird folgende vorgeschlagen:

Man stellt ein Rohstoffgemisch auf der Basis von Kristall-hydraten aus Gips ($CaSO_4 \cdot 2H_2O$), beispielsweise aus Naturgipsstein und Kalk, genommen in einer Menge von 2 Ma.-%, durch Zermahlen bis zum Erzielen einer Teilchengrösse von 0,003 bis 0,01 mm, die insgesamt 70 bis 90 Ma.-% betragen, her. Danach wird das hergestellte Rohstoff-gemisch in einem Gasstrom in dem Rohr einer Trocknungsan-lage bei einer Temperatur von 170° C und einer Strömungsgeschwindigkeit der Gase von 18 m/s behandelt. Das dadurch vorbereitete Gemisch wird an die Walzpresse gegeben und der Einwirkung des Stossdrucks ausgesetzt, der innerhalb von 0,1 Sekunden bis auf 600 MPa steigt. Der Stossdruck wird durch die schnelle Drehung der Walzenpresse erreicht, bei der die lineare Walzgeschwindigkeit mindestens 1,3 m/s beträgt.

Eine Tangentialverschiebung des Rohstoffgemisches mit einer Geschwindigkeit von 0,16 m/s wird durch eine entsprechende Abweichung der Drehgeschwindigkeit der Walzen erreicht. Die Auswahl der Walzengeschwindigkeit bestimmt die aufbaumässige Ausführung der Presse und wird durch den Durchmesser der Pressenwalzen vorgegeben. Durch solch eine Behandlung des Rohstoffgemisches wird ein Kunststein in Form von Schotter (Platten) mit einer dichten, festen Struktur hergestellt, der gleich nach seiner Herstellung eine Dichte von 1900 kg/m$^3$, eine Druckfestig-keit von 17 MPa, eine Wasseraufnahme von 6% und einen Wasserbeständigkeitskoeffizient von 0,91 aufweist.

Nachstehend werden konkrete Ausführungsverfahrens angeführt.

## Beispiel 1

In den im Hammerbrecher zerkleinerten Naturgipsstein ($CaSO_4 \cdot 2H_2O$) wird Kalk in einer Menge von 1 Ma.-% zugegeben und das erhaltene Rohstoffgemisch auf der Basis von Kristallhydraten bis zur Bildung der Teilchen mit den Abmessungen von 0,05 - 0,07 mm dispergiert, die 93 - 95 Ma.-% ausmachen. Hiernach wird das Rohstoffgemisch in die Pressform einer hydraulischen Eindruckpresse eingebracht und auf dieses wirkt ein durch einen Schlag erzeugter Stossdruck mit einer Frequenz von 0,8 Hz 9 Sekunden lang ein. Der Stossdruck wächst bei jedem Schlag bis auf 250 MPa an, wobei eine Tangentialverschiebung des Rohstoffgemisches mit einer Geschwindigkeit von 0,18 m/s durch Schwingungsverstellung der Pressformen durchgeführt wird. Der erhaltene Kunststein in Form von Verkleidungstafeln weist unmittelbar nach dessen Herstellung eine Druckfestigkeit von 22,5 MPa, eine Dichte von 1 850 $kg/m^3$, Wasseraufnahme von 8%, einem Wasserbeständigkeitskoeffizient von 0,85 auf.

## Beispiel 2

Phosphatgipsschlamm wird mit 10 Ma.-% hydratisiertem Zementabfall versetzt. Das erhaltene Rohstoffgemisch auf des Basis von Kristallhydraten wird bis zur Bildung der Teilchen mit Abmessungen von 0,003 bis 0,01, mm die 60 bis 65 Ma.-% ausmachen, despergiert, und diese in einem Gasstrom bei einer Strömungsgeschwindigkeit von 18 m/s und einer Temperatur von 170° C behandelt . Das Rohstoffgemisch in Form 0,5 bis 2,0 mm grosser Körner, die 90 bis 92 Ma.-% ausmachen, wird in eine Stempelpresse befördert und dort der Einwirkung eines Stossdrucks ausgesetzt. Der Stossdruck wird durch einen mit einer Frequenz von 1 Hz 15 Sekunden lang alternierenden Schlag erzeugt. Dabei steigt der Stossdruck bei jedem Schlag bis auf 600 MPa. Der so erhaltene Kunststein in Form von Ziegeln weist unmittelber nach dessen Herstellung eine Druckfestigkeit von 17 MPa, eine Dichte von 1900 kg/m$^3$, eine Wasseraufnahme von 6%, den Wasserbeständigkeitskoeffizient von 0,91 auf.

### Beispiel 3

zu Phosphatgipsschlamm wird Kalk bis zur Erzielung eines pH-Wertes des Rohstoffgemisches auf der Basis von Kristallhydraten von 7 - 8 zugegeben. Das Rohstoffgemisch wird in einem Wasserabsetzbehälter entwässert und in einem Gasstrom bei einer Temperatur von 300 ° C und einer Strömungsgeschwindigkeit von 25 m/s bis zur Bildung der Teilchen mit einer Korngrösse von 0,003 - 0,07 mm dispergiert. Man gibt dieses Rohstoffgemisch in eine Walzenpresse und wirkt auf das Rohstoffgemisch mit einem Stossdruck ein, der durch einen Schlag infolge einer hohen Drehzahl der Walzen erzeugt wird. Dieser Stossdruck steigt während 0,5 Sekunden bis auf 1000 MPa. Die Tangentialverschiebung des betreffenden Rohstoffgemisches mit einer Geschwindigkeit von 0,16 m/s wird durch eine Drehbewegungsabweichung der Walzen in der Presse erreicht. Der Kunststein wird in Form von Schotter hergestellt, der aus 4 mm dicken Platten besteht, die Fraktionen betragen 3 bis 10 mm. Unmittelbar nach der Herstellung des Kunststeins erreicht die Druckfestigkeit 25 MPa, die Dichte 2 200 kg/m$^3$, die Wasseraufnahme 5%, der Wasserbeständigkeitskoeffizient 0,92.

### Beispiel 4

Der Zementstein wird in einem Hammerbrecher zerkleinert und hiernach zermahlen, bis Teilchen mit den Abmessungen von 0,003 bis 0,05 mm gewonnen werden. Beim Zermahlen werden die nicht gerösteten Asbestzementabfälle (Asbestit) in einer Menge von 10 bis 15 Ma.-% hinzugefügt. Das so erhaltene Rohstoffgemisch wird dann in einem Gasstrom mit einer Strömungsgeschwindigkeit von 10 m/s bei einer Temperatur von 90° C dispergiert. Dann wird die Pressform der hydraulischen Eindruckpresse mit dem betreffenden Rohstoffgemisch auf der Basis von Kristallhydraten ausgefüllt, in der ein Stossdruck auf dieses Gemisch einwirkt.

Der Stempel entwickelt den Stossdruck in der Pressform, wobei der Stossdruck während 0,1 Sekunden bis auf 2 000 MPa ansteigt. Die Geschwindigkeit der Tangentialverschiebung des Gemisches erreicht 0,33 m/s und wird durch eine entsprechende Drehung der Pressform erzeugt.

Der erhaltene Kunststein als Verkleidungstafeln weist nach dessen Herstellung eine Druckfestigkeit von 24,5 MPa, eine Dichte von 2 550 kg/m$^3$, Wasseraufnahme 4,5% und einen Wasserbeständigkeitskoeffizient von 0,85 auf.

## PATENTANSPRÜCHE

1. Verfahren zur Herstellung von Kunststein durch Wirkung des Druckes auf ein Rohstoffgemisch auf der Basis von Kristallhydrate, dadurch g e k e n n z e i c h n e t, dass auf das genannte Rohstoffgemisch ein bis auf 250 - 2 000 MPa steigender Stossdruck wirkt, bei dem ein plastisches Fliessen der Kristallhydrate unter deren Sinterung vor sich geht.

2. Verfahren nach Anspruch 1, dadurch g e k e n n z e i c h n e t, dass auf das genannte Rohstoffgemisch ein Stossdruck mit einer Frequenz von 0,8 bis 1,0 Hz 0,1 bis 15,0 Sekunden lang wirkt.

3. Verfahren nach Anspruch 1, 2, dadurch g e k e n n z e i c h n e t, dass der Stossdruck auf das genannte Rohstoffgemisch wirkt, das relativ zu der Einwirkungsrichtung des betreffenden Stossdrucks mit einer Geschwindigkeit von 0,16 bis 0,33 m/s tangential verschoben wird.

4. Verfahren nach Anspruch 1 bis 3, dadurch gekennzeichnet, dass vor der Wirkung auf das genannte Rohstoffgemisch mit dem Stossdruck das Gemisch bis zur Bildung der Teilchen mit den Abmessungen von 0,003 bis 0,07 mm dispergiert wird.

5. Verfahren nach Anspruch 4, dadurch g e k e n n z e i c h n e t, dass die Dispergierung in einem Gasstrom bei einer Temperatur von 90 bis 300° C und einer Strömungsgeschwindigkeit zwischen 10 und 25 m/s durchgeführt wird.

# INTERNATIONAL SEARCH REPORT

International Application No PCT/SU 86/00092

## I. CLASSIFICATION OF SUBJECT MATTER (if several classification symbols apply, indicate all)

According to International Patent Classification (IPC) or to both National Classification and IPC

$IPC^4$ : B 28 B 3/00

## II. FIELDS SEARCHED

Minimum Documentation Searched

| Classification System | Classification Symbols |
|---|---|
| $IPC^4$ | B 28 B 1/10, 3/00+3/26, C 04 B 11/00+11/30,28/14 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| Y | Stroitelnye materialy, N 11(371), November 1985, (Stroiizdat, Moscow), I.M. Lyashkevich "Vysoko-prochnye stroitel-nye materialy i izdelia na osnove gipsa i fosgipsa", see pages 10-11, column 6 | 1,3,4 |
| Y | SU, A1, 863347, (Ordena Trudovogo Krasnogo Znameni institut teplon i massoobmena im. A.V. Lykova AN Belorusskoi SSR) 15 September 1981 (15.09.81), see column 2 (referred to in the description) | 1 |
| Y | FR, A1, 2307627, (CEMENTA AB) 12 November 1976 (12.11.76) see claim 1 | 1 |
| A | SU, A1, 986792, (Vinnitsky politekhniches-ky institut) 7 January 1983 (07.01.83) see the claims | 2 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 12 May 1987 (12.05.87) | 15 June 1987 (15.06.87) |

| International Searching Authority | Signature of Authorized Officer |
|---|---|
| ISA/SU | |

Form PCT/ISA/210 (second sheet) (January 1985)